# EUROPEAN PATENT APPLICATION

(11) **EP 3 412 964 A1**
(43) Date of publication of application: **12.12.2018**
(21) Application number: 17746970.7
(22) Date of filing: 30.01.2017
(51) Int. Cl.: F21V 9/08, G02B 5/28

(54) **LIGHTING DEVICE FOR CREATING LIVING ENVIRONMENT ATMOSPHERE**

(30) Priority: 01.02.2016 CN 201610070761
(71) Applicant: Zhang, Hanxin, Zhuhai, Guangdong 519085 (CN)
(72) Inventor: Zhang, Hanxin, Zhuhai, Guangdong 519085 (CN)
(74) Representative: Lippert Stachow Dresden
(86) International application number: PCT/CN2017/072791
(87) International publication number: WO 2017/133650

(57) **Abstract**

A lighting device (100, 200, 300, 400, 500, 600, 700, 800) for creating an atmosphere of a living environment is disclosed. The lighting device (100, 200, 300, 400, 500, 600, 700, 800) includes an LED light source (102), a transparent housing (110, 210) and a lighting housing. The LED light source (102) has a light-emitting angle no less than 45 degrees. The transparent housing (110, 210) is configured to contain the LED light source (102) and a sealed bottom (106, 206), and has an atmosphere light-filtering portion (104, 204) emitting an atmosphere-creating light and having a first plurality of high refractive index layers (112b/112d/112f/112h/112j/1121/112n) and a second plurality of low refractive index layers (112a/112c/112e/112g/112i/112k/112m/112o) where the first and second pluralities of layers are arranged in a staggered manner. The lighting housing cooperates with the transparent housing (110, 210) to perform at least one of a reflection and a diffusion for the atmosphere-creating light to create the living environment atmosphere.

## Description

### CROSS-REFERENCE TO RELATED APPLICATION AND CLAIM OF PRIORITY

The application claims the benefit of PCT/CN2017/072791, filed on January 30, 2017, at the State Intellectual Property Office in China, the disclosures of which are incorporated herein in their entirety by reference.

### FIELD OF THE INVENTION

The present invention relates to a lighting device, and more particularly to a lighting device that can create an atmosphere for a living environment.

### BACKGROUND OF THE INVENTION

Most of the lighting fixtures used today require the lighting function by arranging the light source in the lamp. In the current environment of global promotion of energy saving and carbon reduction, the configuration of high-performance and long-life LED bulbs in lamps should be the preferred choice. As white heat bulbs are gradually banned, replacing white heat bulbs with LED bulbs as the light source for everyday lamps will likely become the general trend.

With the strong demand for improvements in the quality of life, people have relatively higher standards for different aspects of interior decoration so as to create a comfortable atmosphere in the home environment. Under the requirement of having a satisfying lighting function, the lighting fixtures need to be fashionable and beautiful, and with different color configurations to create a specific atmosphere for a living environment.

Most of the general purpose lamps on the market currently use the method of applying color pigments to the inner wall of the lamp to realize the color effect inside the lamp to create a specific atmosphere of a lighting environment. However, the production process of applying color pigment to the inner wall of the lamp not only pollutes the environment during the production process, but also takes a lot of time and efforts. In practical home indoor applications, such lamps have great limitations, and it is necessary to replace different colors of lamps to achieve different lighting atmospheres, and the cost of replacing lamps and the labor required are also unaffordable for most general consumers.

There is also the color effect by RGB light sources combined with LEDs on the market, which thus creates a specific atmosphere of a lighting environment. This method of realizing the different atmosphere of lighting environments by changing the color of the RGB light source is simple in operation and versatile in color, but there is a big problem that the color of the light from the lamp also changes with the color of the light source, and cannot meet the needs of the basic lighting function of the home environment.

### SUMMARY OF THE INVENTION

Therefore, how to easily and conveniently realize the color effect required by the lighting fixtures to create a specific atmosphere of the home lighting environment, and at the same time ensure the lighting fixtures have normal white light to meet the needs of the basic lighting function of the living environment is a technical problem to be solved.

Therefore, it is necessary to develop a lighting device capable of creating the atmosphere of the living environment, and at the same time, it can also meet the basic needs of the lighting function of the living environment.

In accordance with one aspect of the present invention, a lighting device for creating an atmosphere for a living environment is disclosed. The lighting device includes an LED light source having a light-emitting angle no less than 45 degrees; a transparent housing configured to contain the LED light source and a sealed bottom, and having an atmosphere light-filtering portion emitting an atmosphere-creating light and having a first plurality of high refractive index layers and a second plurality of low refractive index layers where the first and second pluralities of layers are arranged in a staggered manner; and a lighting housing cooperating with the transparent housing to perform at least one of a reflection and a diffusion for the atmosphere-creating light to create the living environment atmosphere.

In accordance with another aspect of the present invention, a lighting device for creating an atmosphere of a living environment is disclosed. The lighting device includes an LED light source having a light-emitting angle no less than 45 degrees; a transparent housing configured to contain the LED light source and having an atmosphere light-filtering portion; and an optical film disposed on a surface of the atmosphere light-filtering portion, and having a first plurality of high refractive index layers and a second plurality of low refractive index layers where the first and second pluralities of layers are arranged in a staggered manner.

In accordance with a further aspect of the present invention, a filter device for a lighting device to create an atmosphere of a living environment is disclosed, wherein the lighting device includes an LED light source having a light-emitting angle no less than 45 degrees and providing an illumination light. The filter device includes a transparent housing configured to contain the LED light source, and having an atmosphere light-filtering portion and a sealed transparent bottom, wherein the sealed transparent bottom allows the illumination light to pass therethrough; and an optical film disposed on a surface of the atmosphere light-filtering portion, and having a first plurality of high refractive index layers and a second plurality of low refractive index layers where the first and second pluralities of layers are arranged in a staggered manner.

The objectives and advantages of the present invention will become more readily apparent to those ordinarily skilled in the art after reviewing the following detailed descriptions and accompanying drawings, in which:

### BRIEF DESCRIPTION OF THE DRAWINGS

Fig. 1 shows a schematic view of a lighting device for creating an atmosphere of a living environment according to an embodiment of the present invention;
Fig. 2 shows a schematic view of a transparent housing covering the light source according to an embodiment of the present invention;
Fig. 3 shows a schematic view of an optical film according to an embodiment of the present invention;
Fig. 4 shows a schematic view of a lighting device for creating an atmosphere of a living environment according to an embodiment of the present invention;
Figs. 5-10 show a plurality of schematic views of a lighting device assembly for creating an atmosphere of a living environment according to a plurality of embodiments of the present invention; and
Figs. 11-31 show the spectral transmission curves of the optical films according to a plurality of embodiments of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for the purposes of illustration and description only; they are not intended to be exhaustive or to be limited to the precise form disclosed.

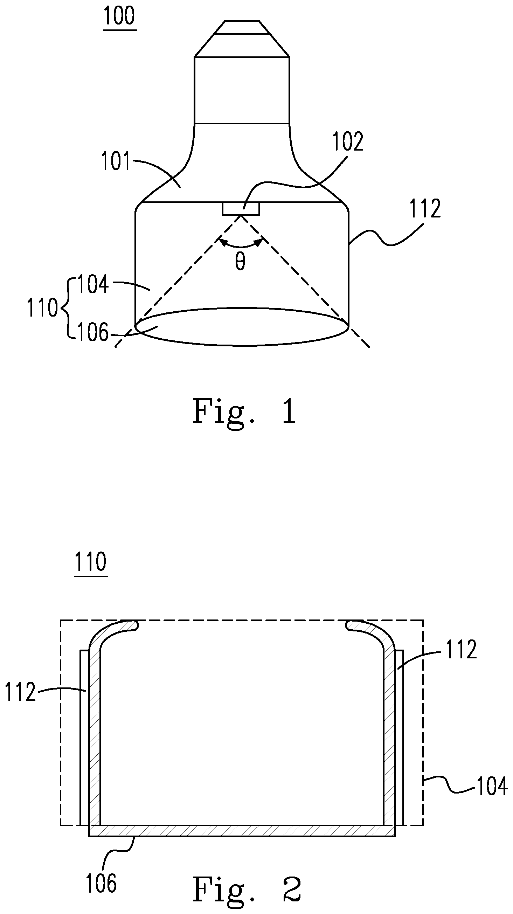

The living light device is usually designed to be in the shape of a bulb. Please refer to Fig. 1, which shows a schematic view of a lighting device for creating an atmosphere of a living environment according to an embodiment of the present invention. As shown, a lighting device 100 includes a socket for a light 101, a light source 102 configured on the socket for a light 101, and a transparent housing 110 containing the light source 102. The socket for a light 101 has a circuit (not shown) inside electrically connected to the light source 102, and a person ordinarily skilled in the art can realize a general lighting device 100 will be equipped with the socket for a light 101 to install the light source 102. The choices of the light source 102 can be white light LED or similar light source which can provide the light with a full optical spectrum. The emitting angle *θ* of the light source 102 is larger or equal to 45 degrees to emit outside the transparent housing 110 in a large range. The light from the light source 102 can be used for lighting function, and can also generate different color lights via filtration to create the required environmental atmosphere. For example, warm color light can provide a warm living atmosphere, and cool color light can provide a cool environmental atmosphere.

Please refer to Fig. 2, which shows a cross-sectional view of the transparent housing 110 covering the light source 102 according to an embodiment of the present invention. The transparent housing 110 can be divided into a light-filtering portion 104 and a lighting transparent bottom 106. On the surface of the light-filtering portion 104 (taking the outer surface for example in Fig. 2, but the inner surface can be chosen also), there is an optical film 112 which has the function of filtration. The optical film 112 can be formed on the surface of the light-filtering portion 104 via the methods of vacuum evaporation, sputtering or deposition. When the light from the light source 102 (not shown) passes through the optical film 112, only part of the light in the specific range of the wavelength can pass, and the other light will be filtered. The filtering function of the light-filtering portion 104 is to create the required environmental atmosphere, so that the function of atmosphere filtration can be seen. Different optical films 112 can be used for the filtering function of the different wavelength ranges to provide different colored lights for creating different environmental atmospheres. On the other hand, the lighting transparent bottom 106 shown in Fig. 2 allows the light from the light source 102 to pass through the transparent housing 110 without interference to achieve the lighting function.

According to an embodiment of the present application, the transparent housing 110 can be configured to contain the light source 102 in a fixed manner. And according to another embodiment of the present application, the transparent housing 110 can be configured to contain the light source 102 in a detachable manner, for example, the thread of a screw is configured in an opening so that the meshing engagement can be matched to the preset configuration on the socket for a light 101 in order that the user can easily replace the transparent housing 110, or further replace the light source 102 when necessary. When the transparent housing 110 is in a replaceable manner, for the requirement in use, the transparent housing 110 has an appropriate filtering effect which can be configured to wrap the light source 102 according to the users choice to make the lighting device 100 create the required atmosphere of the living environment.

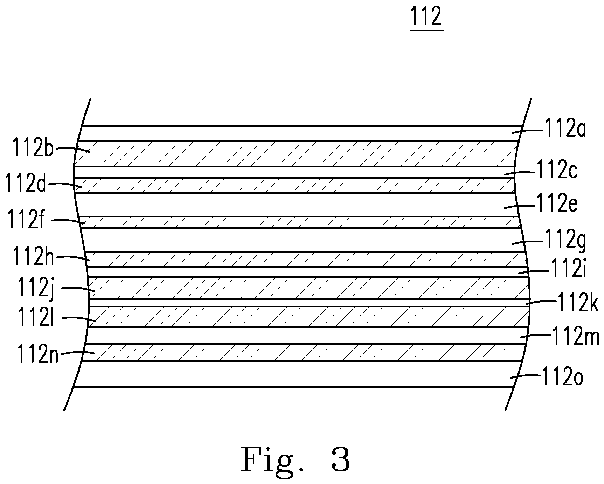

Please refer to Fig. 3, which shows a schematic view of an optical film according to an embodiment of the present invention. There are a plurality of high refractive index layers 112b/112d/112f/112h/112j/1121/112n and a plurality of low refractive index layers 112a/112c/112e/112g/112i/112k/112m/112o, which are totally 15 layers, and the high refractive index layers and the low refractive index layers are arranged in a staggered manner. To achieve the different atmosphere filtering effects, the total layers of the optical film 112 is not limited to 15 layers, and the width of each layer can chose special size according necessary to filter the light in the specific range of wavelengths.

The optical film 112 is a multi-layer optical cut-off film 112 that transmits violet-red light. The optical film 112 is alternately superposed by a high refractive material layer deposited by vacuum evaporation or sputtering of a high refractive material, and a low refractive material layer deposited by vacuum evaporation or sputtering of a low refractive material. The high refractive material is titanium dioxide, zinc sulfide, titanium(V) oxide, niobium pentaoxide, tantalum pentaoxide or zirconium oxide, and the low refractive material is silicon dioxide or magnesium fluoride. The optical thickness of each of the high refractive material layer and the low refractive material layer is from 118 nm to 133 nm. The light transmittance of the optical film 112 for the yellow light band can be adjusted by the change in the number of layers of the high refractive material layer and the low refractive material layer and/or the optical thickness of each layer.

The optical film 112 can effectively and selectively filter out a part of the wavelength band of light, and only retains a specific required wavelength band of light, so that the illumination of the ordinary light source can transmit the violet-red light. Selectively filtering out all or part of the band of light can effectively reduce the transmission of light, avoiding excessive direct light illumination, and also has a certain anti-glare effect on the lamp. Selectively retaining the light transmission of the specific desired band can achieve the specific light transmission color of the lamp, thereby increasing the diversity and aesthetics of the light color of the lamp.

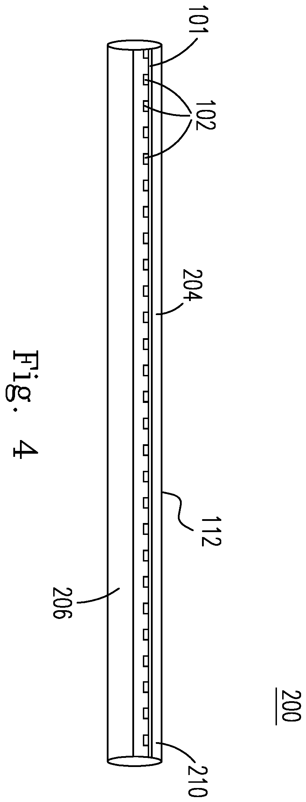

There is only one light source 102 in the embodiment in Fig. 2, and the appearance of the transparent housing 110 for wrapping the light source 102 is more similar to the conventional bulb. Please refer to Fig. 4, which shows a schematic view of a lighting device to create an atmosphere for a living environment according to an embodiment of the present invention. As shown, a lighting device 200 includes a socket for a light 101, a plurality of light sources 102 configured on the socket for a light 101, and a transparent housing 210 contain the light source 102. The socket for a light 101 has a circuit (not shown) inside electrically connected to the light source 102. The choices of the light source 102 can be white light LED or similar light source which can provide the light with a full optical spectrum. The light from the light source 102 can be used for lighting function, and can also generate different color lights via filtration to create the required environmental atmosphere. The transparent housing 210 in Fig. 4 has a light-filtering portion 204 disposed on the above thereof and a lighting transparent bottom 206 disposed on the bottom thereof. On the surface of the light-filtering portion 204 (outer surface or inner surface), there is an optical film 112 which has the function of filtration. The optical film 112 can be formed on the surface of the light-filtering portion 204 by the methods of vacuum evaporation, sputtering or deposition. When the light from the light source 102 (not shown) passes through the optical film 112, only part of the light in the specific range of the wavelength can pass, and the other light will be filtered. The filtering function of the light-filtering portion 204 is to create the required environmental atmosphere, so that can be seen a function of atmosphere filtration. Different optical films 112 can be used for filtering function of the different wavelength ranges to provide different color lights for creating different environmental atmospheres. On the other hand, the lighting transparent bottom 206 shown in Fig. 4 allows the light from the light source 102 to pass through the transparent housing 210 without interference to achieve the lighting function. In Fig. 4, the transparent housing 210 is similar to a long strip shape like a tube, the light-filtering portion 204 is located on one end (top) near the light source 102, and lighting transparent bottom 206 is located on the other end (bottom) far away from the light source 102. In the other embodiments, the locations of the light-filtering portion 204 and the lighting transparent bottom 206 can be changed according to the users' needs.

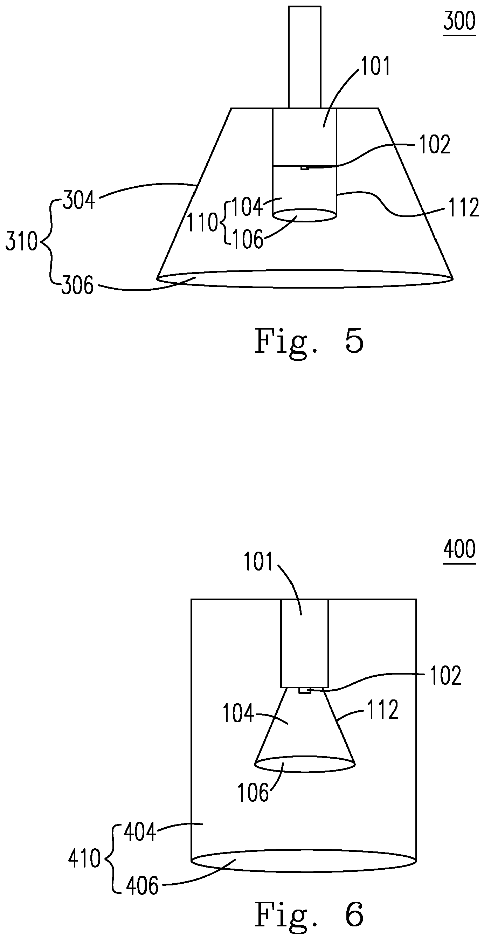

Please refer to Figs. 5-10, which show a plurality of schematic views of a lighting device assembly for creating an atmosphere of a living environment according to a plurality of embodiments of the present invention. In Fig. 5, a lighting device assembly to create an atmosphere for a living environment 300 includes the light source 102, the transparent housing 110 and a lighting housing 310. The transparent housing 110 is configured to contain the light source 102, and has the light-filtering portion 104 and the lighting transparent bottom 106. The choices of the light source 102 can be white light LED or similar light source which can provide the light with a full optical spectrum. Regarding the above-mentioned, the emitting angle *θ* of the light source 102 is larger or equal to 45 degrees. The light from the light source 102 can be used for lighting function, and can also generate different colored lights via filtration to create the required environmental atmosphere. When the light from the light source 102 (not shown) passes through the optical film 112 on the light-filtering portion 104, only part of the light in the specific range of the wavelength can pass, and the other light will be filtered. The filtering function is to create the required environmental atmosphere, so what can be seen is a function of atmosphere filtration. If the light source 102 and the transparent housing 110 are deemed as integral, the light-filtering portion 104 is configured to emit an atmosphere creating light (not shown). The housing wall 304 of the lighting housing 310 cooperates with the transparent housing 110 to make the atmosphere creating light to perform a reflection or a diffusion to form the required atmosphere creating light.

To provide the basic function of illumination at the same time, the lighting housing 310 has an opening 306 located on the location corresponding to the lighting transparent bottom 106 to allow the light from the light source 102 to pass through the lighting transparent bottom 106 of the transparent housing 110 so as to emit from the opening 306 without interference to achieve the function of illumination. A person ordinarily skilled in the art can realize that the technical scheme in the embodiment in Fig. 5 allows the illuminating light to emit downward, and the atmosphere creating light can be reflected by the housing wall 304 of the lighting housing 310 and then be emitted downward so that the underside of the lighting device assembly 300 is provided with the required atmosphere of a living environment and sufficient illumination. Such design of lighting fixtures can be used above the table to provide a well-lit, atmospheric dining environment or other home environment that requires good lighting and a good atmosphere.

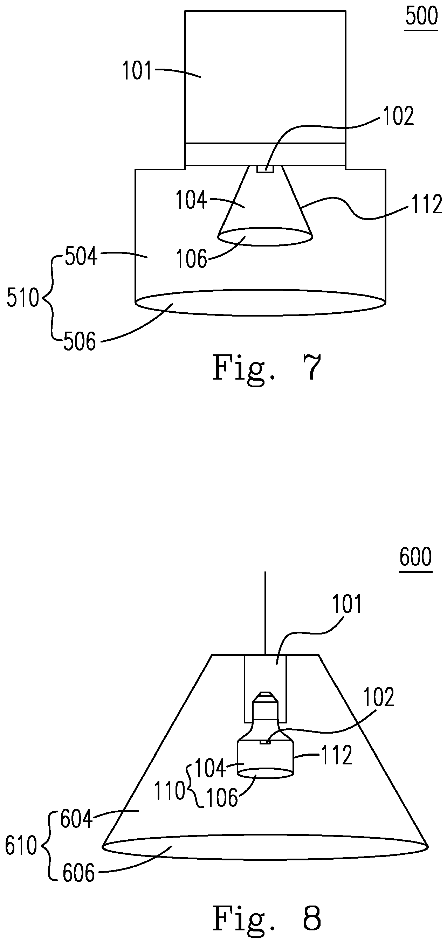

It is worth mentioning that the various shapes of the transparent housing 110 in each of the embodiments of the present invention can be selected according to the requirements of use. For example, the transparent housing 110 shown in Figs. 1 and 5 is nearly cylindrical or barrel-shaped, and the transparent housing 210 of Fig. 4 has a shape close to the elongated cylindrical shape of the tube, and the transparent housing shown in Figs. 6 and 7 (the combination of the light-filtering portion 104 and the lighting transparent bottom 106) is close to a horn shape, and a larger area of the lighting transparent bottom 106 can exert a preferred lighting effect. The shape of the transparent housing can also be designed as a spherical or other geometric shape as desired. In addition, the lighting transparent bottom 106 of the transparent housing 110 is generally formed of a light transmissible material such as glass to block moisture and dust and avoid the light source 102 from being contaminated or getting wet, thereby affecting the life of the light source 102. In other embodiments, however, the lighting transparent bottom 106 can also be hollow shaped so that light from the light source 102 can pass through the lighting transparent bottom 106 without interference.

In Fig. 6, besides the above-mentioned light source 102, transparent housing 110 etc., a lighting device assembly to create an atmosphere for a living environment 400 further includes a lighting housing 410 having cylindrical housing wall 404, an opening 406 of the lighting housing 410 disposed in the corresponding position with the lighting transparent bottom 106 of the transparent housing 110. A person ordinarily skilled in the art can realize that, in the present embodiment, the atmosphere creating light from the light-filtering portion 104 can be diffused from the housing wall 404 of the lighting housing 410, in other words, the housing wall 404 basically is semi-transparent, which can match the color of the atmosphere creating light to further generate preferable environmental atmosphere. In many home environments, such as a living room or bed room, the illumination light should not be projected laterally to avoid glare, and the atmosphere creating light can enter the indoor environment via diffusion. If the location of the housing wall 404 is the same as that of the person, it can also be used as a decoration. In some embodiments, the color and pattern of the housing wall 404 can have an artistic design to allow the lighting device assembly 400 to be more integrated into the atmosphere of the living environment.

The embodiment shown in Fig. 7 is similar to that in Fig. 6, and the difference is the cylindrical housing wall 504 of the lighting housing 510 of the lighting device assembly 500 is flatter and wider, and the below opening 506 larger, allowing a larger area of illumination to illuminate below and increase the effect of the illumination.

Fig. 8 shows the lighting device assembly 600 similar to the chandelier type according to another embodiment of the present invention, the shape of a lighting housing 610 is similar to that of the lighting housing 310 in Fig. 5, and the light source 102 and the transparent housing 110 configured therein are similar to those shown in the embodiment in Fig. 1, and the socket for a light 101 can be connected to the lighting housing 610 to allow the entire lighting device assembly 600 to be suspended.

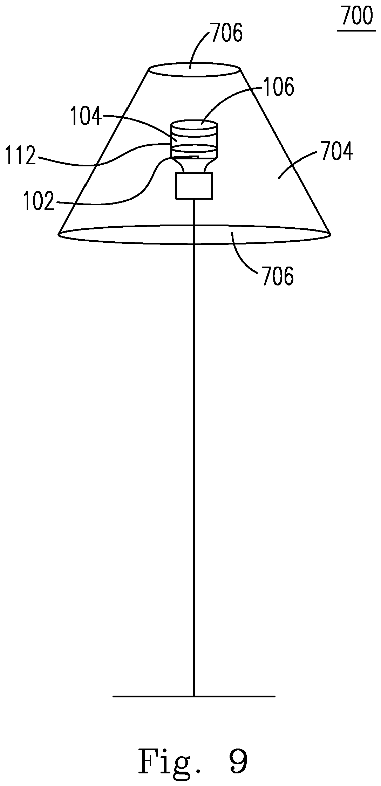

Fig. 9 shows the lighting device assembly 700 similar to table lamp form according to another embodiment of the present invention, wherein the configuration direction of the socket for a light 101, the light source 102 and the transparent housing (the combination of the light-filtering portion 104 and the lighting transparent bottom 106) is opposite to those of the previous embodiments, the light-filtering portion 104 to which the optical film 112 is attached occupies only a ring-shaped region on the lateral surface of the transparent housing, and the other region of the transparent housing can be deemed as the lighting transparent bottom 106. In addition, the lighting device assembly 700 has a horn shaped housing wall 704 and an opening 706 on the above and under the bottom, respectively to provide the lighting effect of different direction. The housing wall 704 can provide the reflection and diffusion effects at the same time to generate the required atmosphere of a living environment.

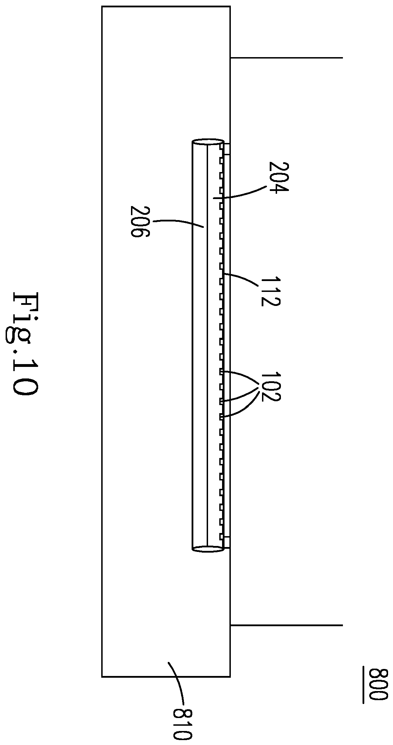

Fig. 10 shows using the lighting device assembly 800 of the lighting device 200 shown in Fig. 4, having a transparent lighting housing 810 that fully wraps the outside thereof. The present embodiment is suitable for lighting in a large space and provides the required environmental atmosphere conforming to life at the same time.

The optical film 112 applied in the lighting fixtures not only can be directly deposited on the plastic, glass or plexiglass lampshade or bulb via the method of vacuum evaporation or sputtering to form the optical film 112, and the lampshade or bulb with the optical film 112 allows common lighting fixtures to illuminate violet-red light, and the color emitted from the lighting fixtures is not changed to provide people's illumination and beautify the lighting fixtures.

### Embodiment 1: method for producing the optical film 112 that transmits violet-red light 1:

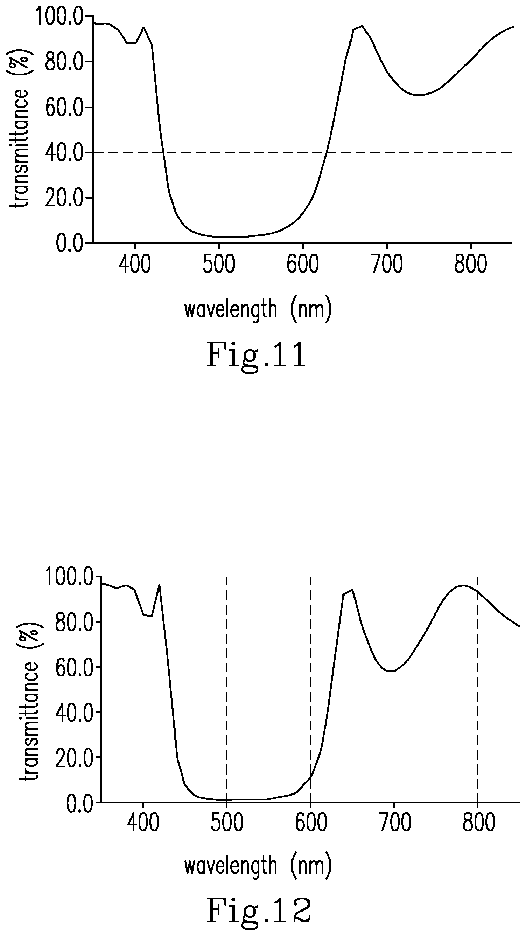

The violet-red transparent optical film 112 is formed by alternately superposing a layer of titanium dioxide formed by depositing titanium dioxide by vacuum evaporation or sputtering, and a layer of silicon dioxide deposited by vacuum evaporation or sputtering. There are totally 10 layers of titanium dioxide layer and silicon dioxide layer. The first layer is a titanium dioxide layer, the second layer is a silicon dioxide layer, the third layer is a titanium dioxide layer, the fourth layer is a silicon dioxide layer, the fifth layer is a titanium dioxide layer, the sixth layer is a silicon dioxide layer, the seventh layer is a titanium dioxide layer, the eighth layer is a silicon dioxide layer, the ninth layer is a titanium dioxide layer, and the tenth layer is a silicon dioxide layer. The optical thickness of each layer is 118 nm-133 nm. The transmittance of the optical film 112 for the yellow light band is adjusted by the change in the number of layers of the high refractive material layer and the low refractive material layer and/or the optical thickness of each layer. The spectral transmission curve of the translucent violet-red optical film 112 is as shown in Fig. 11, wherein the light source is white light, the medium is air, the substrate is glass, the angle is 0.0, and the reference wavelength is 550.0 nm.

### Embodiment 2: method for producing the optical film 112 that transmits violet-red light 2:

The violet-red transparent optical film 112 is formed by alternately superposing a layer of titanium dioxide formed by depositing titanium dioxide by vacuum evaporation or sputtering, and a layer of silicon dioxide deposited by vacuum evaporation or sputtering. There are totally 12 layers of titanium dioxide layer and silicon dioxide layer. The first layer is a titanium dioxide layer, the second layer is a silicon dioxide layer, the third layer is a titanium dioxide layer, the fourth layer is a silicon dioxide layer, the fifth layer is a titanium dioxide layer, the sixth layer is a silicon dioxide layer, the seventh layer is a titanium dioxide layer, the eighth layer is a silicon dioxide layer, the ninth layer is a titanium dioxide layer, the tenth layer is a silicon dioxide layer, the eleventh layer is a titanium dioxide layer, and the twelfth layer is a silicon dioxide layer. The optical thickness of each layer is 118 nm-133 nm. The transmittance of the optical film 112 for the yellow light band is adjusted by the change in the number of layers of the high refractive material layer and the low refractive material layer and/or the optical thickness of each layer. The spectral transmission curve of the translucent violet-red optical film 112 is as shown in Fig. 12, wherein the light source is white light, the medium is air, the substrate is glass, the angle is 0.0, and the reference wavelength is 550.0 nm.

### Embodiment 3: method for producing the optical film 112 that transmits violet-red light 3:

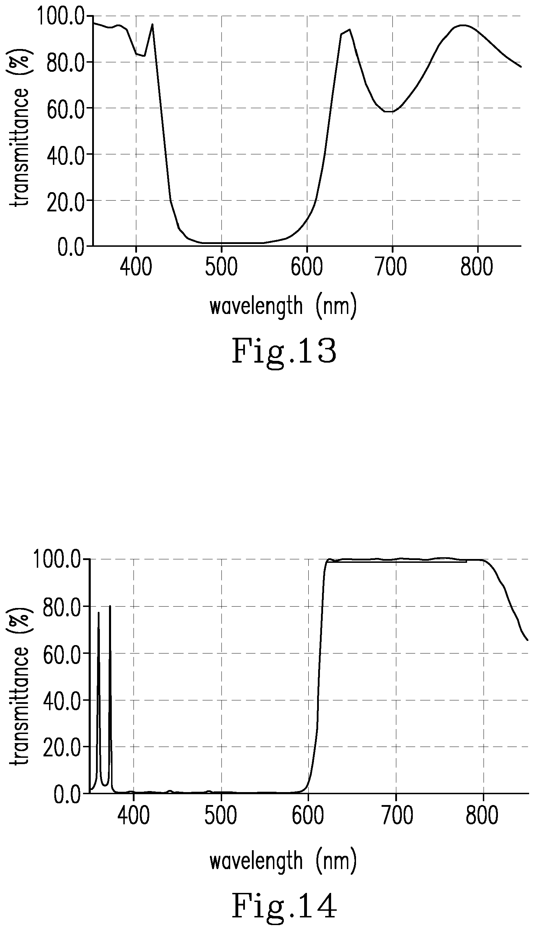

The violet-red transparent optical film 112 is formed by alternately superposing a layer of titanium dioxide formed by depositing titanium dioxide by vacuum evaporation or sputtering, and a layer of silicon dioxide deposited by vacuum evaporation or sputtering. There are totally 14 layers of titanium dioxide layer and silicon dioxide layer. The first layer is a titanium dioxide layer, the second layer is a silicon dioxide layer, the third layer is a titanium dioxide layer, the fourth layer is a silicon dioxide layer, the fifth layer is a titanium dioxide layer, the sixth layer is a silicon dioxide layer, the seventh layer is a titanium dioxide layer, the eighth layer is a silicon dioxide layer, the ninth layer is a titanium dioxide layer, the tenth layer is a silicon dioxide layer, the eleventh layer is a titanium dioxide layer, the twelfth layer is a silicon dioxide layer, the thirteenth layer is a titanium dioxide layer, the fourteenth layer is a silicon dioxide layer. The optical thickness of each layer is 118 nm-133 nm. The transmittance of the optical film 112 for the yellow light band is adjusted by the change in the number of layers of the high refractive material layer and the low refractive material layer and/or the optical thickness of each layer. The spectral transmission curve of the translucent violet-red optical film 112 is as shown in Fig. 13, wherein the light source is white light, the medium is air, the substrate is glass, the angle is 0.0, and the reference wavelength is 550.0 nm.

An optical film 112 of the present invention is a multi-layer optical cut-off optical film 112 that transmits red light, and is formed by alternately superposing a high refractive material layer deposited by high refractive material via vacuum evaporation or sputtering, and a low refractive material layer deposited by low refractive material via vacuum evaporation. The high refractive material is titanium dioxide, zinc sulfide, titanium(V) oxide, niobium pentaoxide, tantalum pentaoxide or zirconium oxide, and the low refractive material is silicon dioxide or magnesium fluoride.

### Embodiment 4: method for producing the optical film 112 that transmits red light 1:

The red-transparent optical film 112 is formed by alternately superposing a layer of titanium dioxide formed by depositing titanium dioxide by vacuum evaporation or sputtering, and a layer of silicon dioxide deposited by vacuum evaporation or sputtering. There are totally 27 layers of titanium dioxide layer and silicon dioxide layer. The first layer is coated by titanium dioxide, the second layer is coated by silicon dioxide, the third layer is coated by titanium dioxide, the fourth layer is coated by silicon dioxide, the fifth layer is coated by titanium dioxide, the sixth layer is coated by silicon dioxide, the seventh layer is coated by titanium dioxide, the eighth layer is coated by silicon dioxide, the ninth layer is coated by titanium dioxide, the tenth layer is coated by silicon dioxide, the eleventh layer is coated by titanium dioxide, the twelfth layer is coated by silicon dioxide, the thirteenth layer is coated by titanium dioxide, the fourteenth layer is coated by silicon dioxide, the fifteenth layer is coated by titanium dioxide, the sixteenth layer is coated by silicon dioxide, the seventeenth layer is coated by titanium dioxide, the eighteenth layer is coated by silicon dioxide, the nineteenth layer is coated by titanium dioxide, the twentieth layer is coated by silicon dioxide, the twenty-first layer is coated by titanium dioxide, the twenty-second layer is coated by silicon dioxide, the twenty-third layer is coated by titanium dioxide, the twenty-fourth layer is coated by silicon dioxide, the twenty-fifth layer is coated by titanium dioxide, the twenty-sixth layer is coated by silicon dioxide, and the twenty-seventh layer is coated by titanium dioxide. The optical thickness of each layer is from 110 nm to 135 nm. The transmittance of the purple and blue light bands is altered or controlled by superimposing the different layers of the two materials or changing the optical thickness of each layer. The spectral transmission curve of such a red-transmissive optical film 112 is shown in Fig. 14, wherein the light source is white light, the medium is air, the substrate is glass, the angle is 0.0, and the reference wavelength is 550.0 nm.

### Embodiment 5: method for producing the optical film 112 that transmits red light 2:

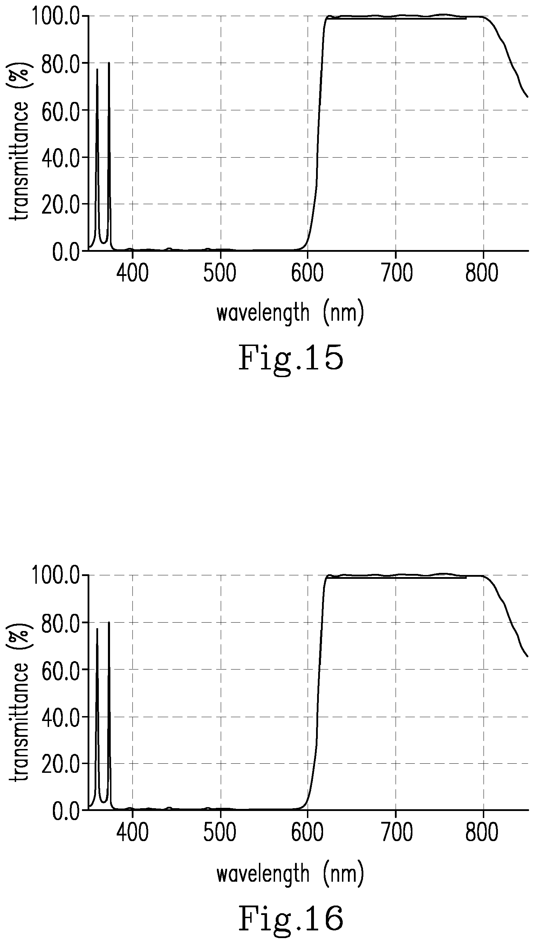

The red-transparent optical film 112 is formed by alternately superposing a layer of titanium dioxide formed by depositing titanium dioxide by vacuum evaporation or sputtering, and a layer of silicon dioxide deposited by vacuum evaporation or sputtering. There are totally 29 layers of titanium dioxide layer and silicon dioxide layer. The first layer is coated by titanium dioxide, the second layer is coated by silicon dioxide, the third layer is coated by titanium dioxide, the fourth layer is coated by silicon dioxide, the fifth layer is coated by titanium dioxide, the sixth layer is coated by silicon dioxide, the seventh layer is coated by titanium dioxide, the eighth layer is coated by silicon dioxide, the ninth layer is coated by titanium dioxide, the tenth layer is coated by silicon dioxide, the eleventh layer is coated by titanium dioxide, the twelfth layer is coated by silicon dioxide, the thirteenth layer is coated by titanium dioxide, the fourteenth layer is coated by silicon dioxide, the fifteenth layer is coated by titanium dioxide, the sixteenth layer is coated by silicon dioxide, the seventeenth layer is coated by titanium dioxide, the eighteenth layer is coated by silicon dioxide, the nineteenth layer is coated by titanium dioxide, the twentieth layer is coated by silicon dioxide, the twenty-first layer is coated by titanium dioxide, the twenty-second layer is coated by silicon dioxide, the twenty-third layer is coated by titanium dioxide, the twenty-fourth layer is coated by silicon dioxide, the twenty-fifth layer is coated by titanium dioxide, the twenty-sixth layer is coated by silicon dioxide, the twenty-seventh layer is coated by titanium dioxide, the twenty-eighth layer is coated by silicon dioxide, and the twenty-ninth layer is coated by titanium dioxide. The optical thickness of each layer is from 110 nm to 135 nm. The transmittance of the purple and blue light bands is altered or controlled by superimposing the different layers of the two materials or changing the optical thickness of each layer. The spectral transmission curve of such a red-transmissive optical film 112 is shown in Fig. 15, wherein the light source is white light, the medium is air, the substrate is glass, the angle is 0.0, and the reference wavelength is 550.0 nm.

### Embodiment 6: method for producing the optical film 112 that transmits red light 3:

The red-transparent optical film 112 is formed by alternately superposing a layer of titanium dioxide formed by depositing titanium dioxide by vacuum evaporation or sputtering, and a layer of silicon dioxide deposited by vacuum evaporation or sputtering. There are totally 31 layers of titanium dioxide layer and silicon dioxide layer. The first layer is coated by titanium dioxide, the second layer is coated by silicon dioxide, the third layer is coated by titanium dioxide, the fourth layer is coated by silicon dioxide, the fifth layer is coated by titanium dioxide, the sixth layer is coated by silicon dioxide, the seventh layer is coated by titanium dioxide, the eighth layer is coated by silicon dioxide, the ninth layer is coated by titanium dioxide, the tenth layer is coated by silicon dioxide, the eleventh layer is coated by titanium dioxide, the twelfth layer is coated by silicon dioxide, the thirteenth layer is coated by titanium dioxide, the fourteenth layer is coated by silicon dioxide, the fifteenth layer is coated by titanium dioxide, the sixteenth layer is coated by silicon dioxide, the seventeenth layer is coated by titanium dioxide, the eighteenth layer is coated by silicon dioxide, the nineteenth layer is coated by titanium dioxide, the twentieth layer is coated by silicon dioxide, the twenty-first layer is coated by titanium dioxide, the twenty-second layer is coated by silicon dioxide, the twenty-third layer is coated by titanium dioxide, the twenty-fourth layer is coated by silicon dioxide, the twenty-fifth layer is coated by titanium dioxide, the twenty-sixth layer is coated by silicon dioxide, the twenty-seventh layer is coated by titanium dioxide, the twenty-eighth layer is coated by silicon dioxide, the twenty-ninth layer is coated by titanium dioxide, the thirtieth layer is coated by silicon dioxide, and the thirty-first layer is coated by titanium dioxide. The optical thickness of each layer is from 110 nm to 135 nm. The transmittance of the purple and blue light bands is altered or controlled by superimposing the different layers of the two materials or changing the optical thickness of each layer. The spectral transmission curve of such a red-transmissive optical film 112 is shown in Fig. 16, wherein the light source is white light, the medium is air, the substrate is glass, the angle is 0.0, and the reference wavelength is 550.0 nm.

An optical film 112 of the present invention is a multi-layer optical cut-off optical film 112 that transmits blue light, and is formed by alternately superposing a high refractive material layer deposited by high refractive material via vacuum evaporation or sputtering, and a low refractive material layer deposited by low refractive material via vacuum evaporation. The high refractive material is titanium dioxide, zinc sulfide, titanium(V) oxide, niobium pentaoxide, tantalum pentaoxide or zirconium oxide, and the low refractive material is silicon dioxide or magnesium fluoride.

### Embodiment 7: method for producing the optical film 112 that transmits blue light 1:

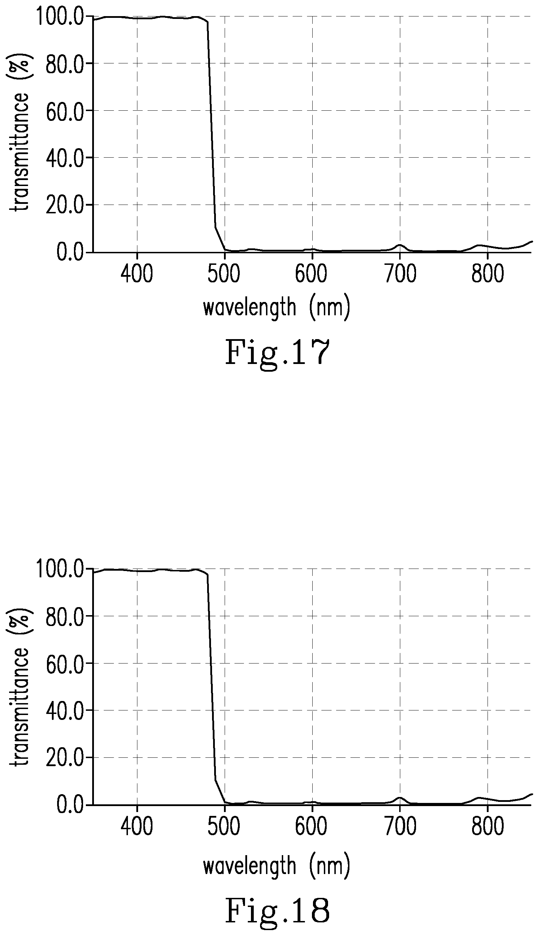

The blue-transparent optical film 112 is formed by alternately superposing a layer of titanium dioxide formed by depositing titanium dioxide by vacuum evaporation or sputtering, and a layer of silicon dioxide deposited by vacuum evaporation or sputtering. There are totally 28 layers of titanium dioxide layer and silicon dioxide layer. The first layer is coated by titanium dioxide, the second layer is coated by silicon dioxide, the third layer is coated by titanium dioxide, the fourth layer is coated by silicon dioxide, the fifth layer is coated by titanium dioxide, the sixth layer is coated by silicon dioxide, the seventh layer is coated by titanium dioxide, the eighth layer is coated by silicon dioxide, the ninth layer is coated by titanium dioxide, the tenth layer is coated by silicon dioxide, the eleventh layer is coated by titanium dioxide, the twelfth layer is coated by silicon dioxide, the thirteenth layer is coated by titanium dioxide, the fourteenth layer is coated by silicon dioxide, the fifteenth layer is coated by titanium dioxide, the sixteenth layer is coated by silicon dioxide, the seventeenth layer is coated by titanium dioxide, the eighteenth layer is coated by silicon dioxide, the nineteenth layer is coated by titanium dioxide, the twentieth layer is coated by silicon dioxide, the twenty-first layer is coated by titanium dioxide, the twenty-second layer is coated by silicon dioxide, the twenty-third layer is coated by titanium dioxide, the twenty-fourth layer is coated by silicon dioxide, the twenty-fifth layer is coated by titanium dioxide, the twenty-sixth layer is coated by silicon dioxide, the twenty-seventh layer is coated by titanium dioxide, and the twenty-eighth layer is coated by silicon dioxide. The optical thickness of each layer is from 125 nm to 160 nm. The transmittance of the yellow and red light bands is altered or controlled by superimposing the different layers of the two materials or changing the optical thickness of each layer. The spectral transmission curve of such a blue-transmissive optical film 112 is shown in Fig. 17, wherein the light source is white light, the medium is air, the substrate is glass, the angle is 0.0, and the reference wavelength is 550.0 nm.

### Embodiment 8: method for producing the optical film 112 that transmits blue light 2:

The blue-transparent optical film 112 is formed by alternately superposing a layer of titanium dioxide formed by depositing titanium dioxide by vacuum evaporation or sputtering, and a layer of silicon dioxide deposited by vacuum evaporation or sputtering. There are totally 30 layers of titanium dioxide layer and silicon dioxide layer. The first layer is coated by titanium dioxide, the second layer is coated by silicon dioxide, the third layer is coated by titanium dioxide, the fourth layer is coated by silicon dioxide, the fifth layer is coated by titanium dioxide, the sixth layer is coated by silicon dioxide, the seventh layer is coated by titanium dioxide, the eighth layer is coated by silicon dioxide, the ninth layer is coated by titanium dioxide, the tenth layer is coated by silicon dioxide, the eleventh layer is coated by titanium dioxide, the twelfth layer is coated by silicon dioxide, the thirteenth layer is coated by titanium dioxide, the fourteenth layer is coated by silicon dioxide, the fifteenth layer is coated by titanium dioxide, the sixteenth layer is coated by silicon dioxide, the seventeenth layer is coated by titanium dioxide, the eighteenth layer is coated by silicon dioxide, the nineteenth layer is coated by titanium dioxide, the twentieth layer is coated by silicon dioxide, the twenty-first layer is coated by titanium dioxide, the twenty-second layer is coated by silicon dioxide, the twenty-third layer is coated by titanium dioxide, the twenty-fourth layer is coated by silicon dioxide, the twenty-fifth layer is coated by titanium dioxide, the twenty-sixth layer is coated by silicon dioxide, the twenty-seventh layer is coated by titanium dioxide, the twenty-eighth layer is coated by silicon dioxide, the twenty-ninth layer is coated by titanium dioxide, and the thirtieth layer is coated by silicon dioxide. The optical thickness of each layer is from 125 nm to 160 nm. The transmittance of the yellow and red light bands is altered or controlled by superimposing the different layers of the two materials or changing the optical thickness of each layer. The spectral transmission curve of such a blue-transmissive optical film 112 is shown in Fig. 18, wherein the light source is white light, the medium is air, the substrate is glass, the angle is 0.0, and the reference wavelength is 550.0 nm.

### Embodiment 9: method for producing the optical film 112 that transmits blue light 3:

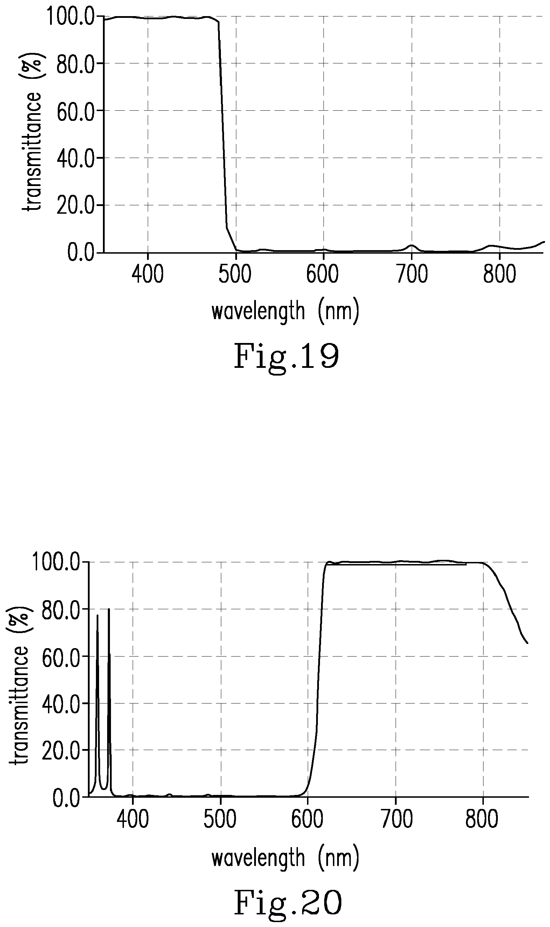

The blue-transparent optical film 112 is formed by alternately superposing a layer of titanium dioxide formed by depositing titanium dioxide by vacuum evaporation or sputtering, and a layer of silicon dioxide deposited by vacuum evaporation or sputtering. There are totally 32 layers of titanium dioxide layer and silicon dioxide layer. The first layer is coated by titanium dioxide, the second layer is coated by silicon dioxide, the third layer is coated by titanium dioxide, the fourth layer is coated by silicon dioxide, the fifth layer is coated by titanium dioxide, the sixth layer is coated by silicon dioxide, the seventh layer is coated by titanium dioxide, the eighth layer is coated by silicon dioxide, the ninth layer is coated by titanium dioxide, the tenth layer is coated by silicon dioxide, the eleventh layer is coated by titanium dioxide, the twelfth layer is coated by silicon dioxide, the thirteenth layer is coated by titanium dioxide, the fourteenth layer is coated by silicon dioxide, the fifteenth layer is coated by titanium dioxide, the sixteenth layer is coated by silicon dioxide, the seventeenth layer is coated by titanium dioxide, the eighteenth layer is coated by silicon dioxide, the nineteenth layer is coated by titanium dioxide, the twentieth layer is coated by silicon dioxide, the twenty-first layer is coated by titanium dioxide, the twenty-second layer is coated by silicon dioxide, the twenty-third layer is coated by titanium dioxide, the twenty-fourth layer is coated by silicon dioxide, the twenty-fifth layer is coated by titanium dioxide, the twenty-sixth layer is coated by silicon dioxide, the twenty-seventh layer is coated by titanium dioxide, the twenty-eighth layer is coated by silicon dioxide, the twenty-ninth layer is coated by titanium dioxide, the thirtieth layer is coated by silicon dioxide, the thirty-first layer is coated by titanium dioxide, and the thirty-second layer is coated by silicon dioxide. The optical thickness of each layer is from 125 nm to 160 nm. The transmittance of the yellow and red light bands is altered or controlled by superimposing the different layers of the two materials or changing the optical thickness of each layer. The spectral transmission curve of such a blue-transmissive optical film 112 is shown in Fig. 19, wherein the light source is white light, the medium is air, the substrate is glass, the angle is 0.0, and the reference wavelength is 550.0 nm.

An optical film 112 of the present invention is a multi-layer optical cut-off optical film 112 that transmits orange light, and is formed by alternately superposing a high refractive material layer deposited by high refractive material via vacuum evaporation or sputtering, and a low refractive material layer deposited by low refractive material via vacuum evaporation. The high refractive material is ferric oxide etc., and the low refractive material is silicon dioxide or magnesium fluoride. In the Embodiment 10 to Embodiment 15, the total layers of the high refractive material layers and the low refractive material layer are only 7-11 layers, which can effectively reduce the cost.

### Embodiment 10: method for producing the optical film 112 that transmits orange light 1:

The orange-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 11 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, the seventh layer is coated by ferric oxide, the eighth layer is coated by silicon dioxide, the ninth layer is coated by ferric oxide, the tenth layer is coated by silicon dioxide, and the eleventh layer is coated by ferric oxide. The optical thickness of each layer is from 125 nm to 140 nm. The transmittance of the purple and blue light bands is altered or controlled by superimposing the different layers of the two materials or changing the optical thickness of each layer. The spectral transmission curve of such a orange-transmissive optical film 112 is shown in Fig. 20, wherein the light source is white light, the medium is air, the substrate is glass, the angle is 0.0, and the reference wavelength is 550.0 nm.

### Embodiment 11: method for producing the optical film 112 that transmits orange light 2:

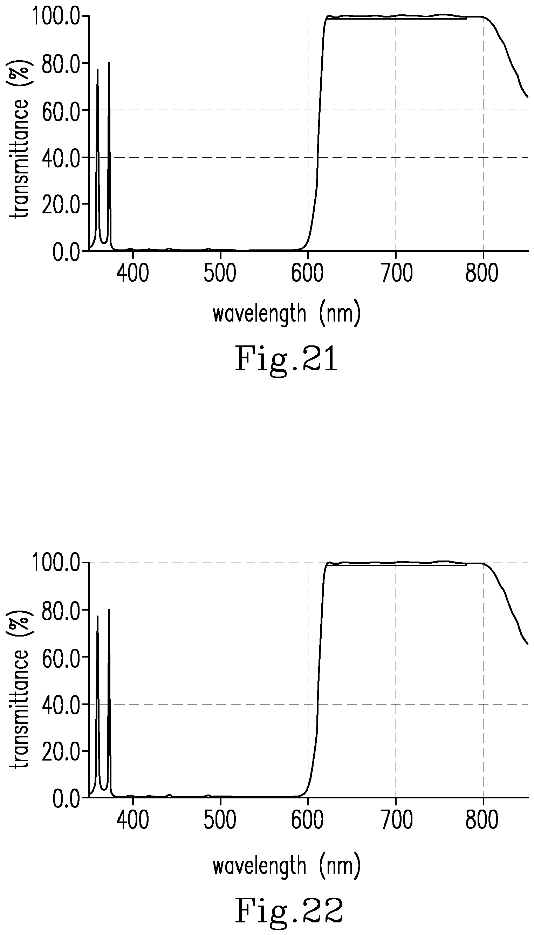

The orange-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 9 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, the seventh layer is coated by ferric oxide, the eighth layer is coated by silicon dioxide, and the ninth layer is coated by ferric oxide. The optical thickness of each layer is from 125 nm to 140 nm. The transmittance of the purple and blue light bands is altered or controlled by superimposing the different layers of the two materials or changing the optical thickness of each layer. The spectral transmission curve of such a orange-transmissive optical film 112 is shown in Fig. 21, wherein the light source is white light, the medium is air, the substrate is glass, the angle is 0.0, and the reference wavelength is 550.0 nm.

### Embodiment 12: method for producing the optical film 112 that transmits orange light 3:

The orange-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 7 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, and the seventh layer is coated by ferric oxide. The optical thickness of each layer is from 125 nm to 140 nm. The transmittance of the purple and blue light bands is altered or controlled by superimposing the different layers of the two materials or changing the optical thickness of each layer. The spectral transmission curve of such a orange-transmissive optical film 112 is shown in Fig. 22, wherein the light source is white light, the medium is air, the substrate is glass, the angle is 0.0, and the reference wavelength is 550.0 nm.

### Embodiment 13: method for producing the optical film 112 that transmits orange light 4:

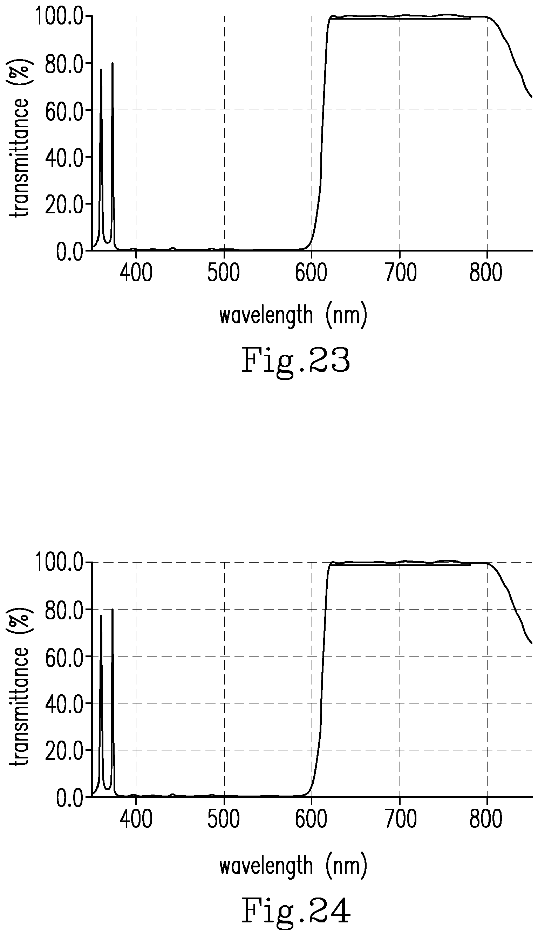

The orange-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 11 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, the seventh layer is coated by ferric oxide, the eighth layer is coated by silicon dioxide, the ninth layer is coated by ferric oxide, the tenth layer is coated by silicon dioxide, and the eleventh layer is coated by ferric oxide. The optical thickness of each layer is from 115 nm to 125 nm. The transmittance of the purple and blue light bands is altered or controlled by superimposing the different layers of the two materials or changing the optical thickness of each layer. The spectral transmission curve of such a orange-transmissive optical film 112 is shown in Fig. 23, wherein the light source is white light, the medium is air, the substrate is glass, the angle is 0.0, and the reference wavelength is 550.0 nm.

### Embodiment 14: method for producing the optical film 112 that transmits orange light 5:

The orange-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 9 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, the seventh layer is coated by ferric oxide, the eighth layer is coated by silicon dioxide, and the ninth layer is coated by ferric oxide. The optical thickness of each layer is from 115 nm to 125 nm. The transmittance of the purple and blue light bands is altered or controlled by superimposing the different layers of the two materials or changing the optical thickness of each layer. The spectral transmission curve of such a orange-transmissive optical film 112 is shown in Fig. 24, wherein the light source is white light, the medium is air, the substrate is glass, the angle is 0.0, and the reference wavelength is 550.0 nm.

### Embodiment 15: method for producing the optical film 112 that transmits orange light 6:

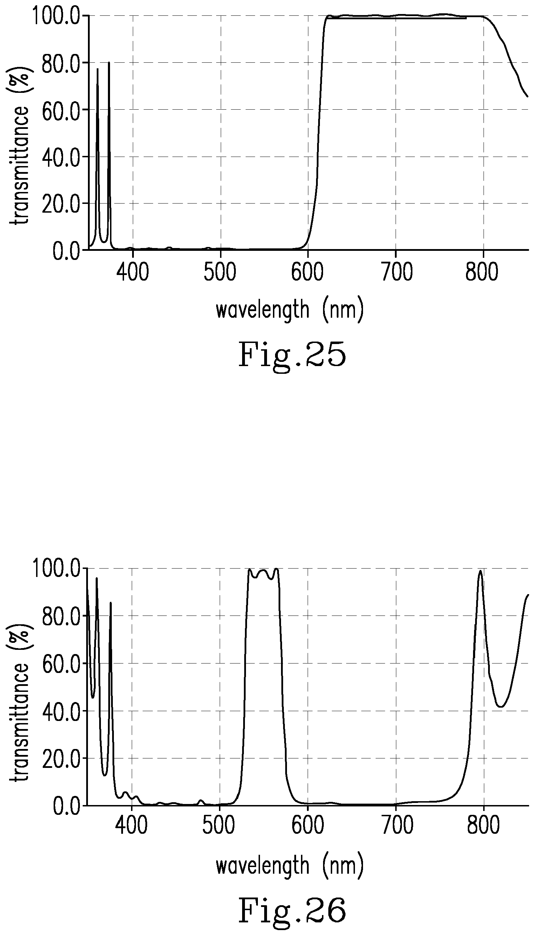

The orange-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 7 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, and the seventh layer is coated by ferric oxide. The optical thickness of each layer is from 115 nm to 125 nm. The transmittance of the purple and blue light bands is altered or controlled by superimposing the different layers of the two materials or changing the optical thickness of each layer. The spectral transmission curve of such a orange-transmissive optical film 112 is shown in Fig. 25, wherein the light source is white light, the medium is air, the substrate is glass, the angle is 0.0, and the reference wavelength is 550.0 nm.

An optical film 112 of the present invention is a multi-layer optical cut-off optical film 112 that transmits green light, and is formed by alternately superposing a high refractive material layer deposited by high refractive material via vacuum evaporation or sputtering, and a low refractive material layer deposited by low refractive material via vacuum evaporation. The high refractive material is ferric oxide etc., and the low refractive material is silicon dioxide or magnesium fluoride. In the Embodiment 16 to Embodiment 18, the total layers of the high refractive material layers and the low refractive material layer are only 7-11 layers, which can effectively reduce the cost.

### Embodiment 16: method for producing the optical film 112 that transmits green light 1:

The green-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 11 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, the seventh layer is coated by ferric oxide, the eighth layer is coated by silicon dioxide, the ninth layer is coated by ferric oxide, the tenth layer is coated by silicon dioxide, and the eleventh layer is coated by ferric oxide. The optical thickness of each layer is from 140 nm to 160 nm. The transmittance of the purple and blue light bands is altered or controlled by superimposing the different layers of the two materials or changing the optical thickness of each layer. The spectral transmission curve of such a green-transmissive optical film 112 is shown in Fig. 26, wherein the light source is white light, the medium is air, the substrate is glass, the angle is 0.0, and the reference wavelength is 550.0 nm.

### Embodiment 17: method for producing the optical film 112 that transmits green light 2:

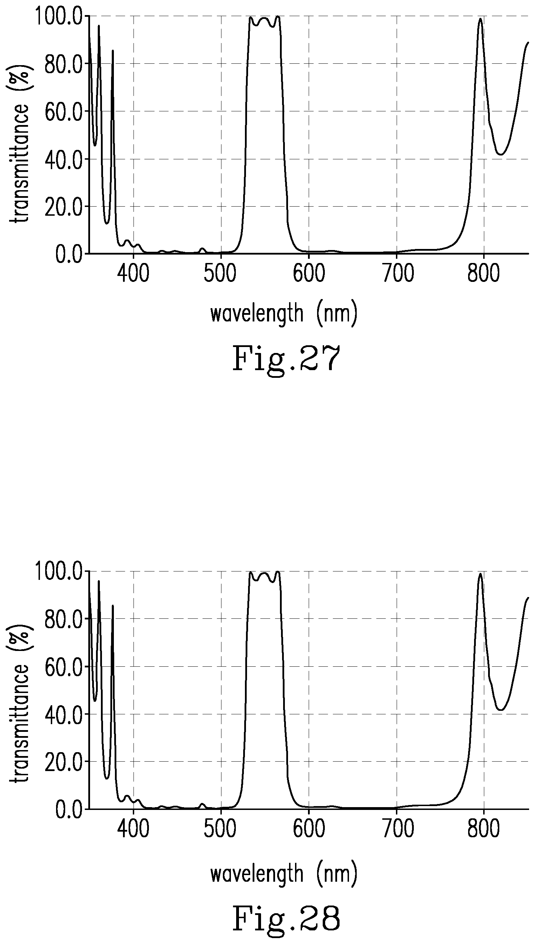

The green-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 9 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, the seventh layer is coated by ferric oxide, the eighth layer is coated by silicon dioxide, and the ninth layer is coated by ferric oxide. The optical thickness of each layer is from 140 nm to 160 nm. The transmittance of the purple and blue light bands is altered or controlled by superimposing the different layers of the two materials or changing the optical thickness of each layer. The spectral transmission curve of such a green-transmissive optical film 112 is shown in Fig. 27, wherein the light source is white light, the medium is air, the substrate is glass, the angle is 0.0, and the reference wavelength is 550.0 nm.

### Embodiment 18: method for producing the optical film 112 that transmits green light 3:

The green-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 7 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, and the seventh layer is coated by ferric oxide. The optical thickness of each layer is from 140 nm to 160 nm. The transmittance of the purple and blue light bands is altered or controlled by superimposing the different layers of the two materials or changing the optical thickness of each layer. The spectral transmission curve of such a green-transmissive optical film 112 is shown in Fig. 28, wherein the light source is white light, the medium is air, the substrate is glass, the angle is 0.0, and the reference wavelength is 550.0 nm.

An optical film 112 of the present invention is a multi-layer optical cut-off optical film 112 that transmits yellow light, and is formed by alternately superposing a high refractive material layer deposited by high refractive material via vacuum evaporation or sputtering, and a low refractive material layer deposited by low refractive material via vacuum evaporation. The high refractive material is ferric oxide etc., and the low refractive material is silicon dioxide or magnesium fluoride. In the Embodiment 19 to Embodiment 21, the total layers of the high refractive material layers and the low refractive material layer are only 7-11 layers, which can effectively reduce the cost.

### Embodiment 19: method for producing the optical film 112 that transmits yellow light 1:

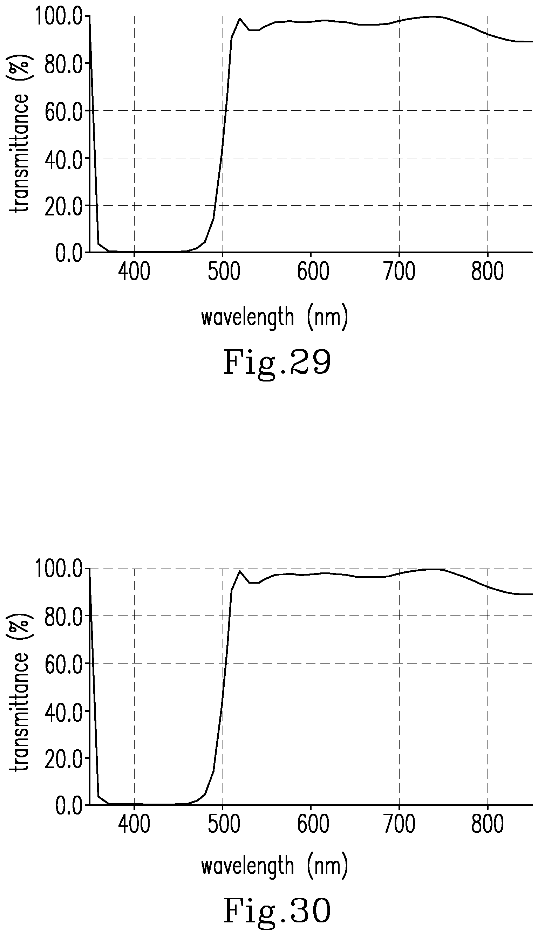

The yellow-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 11 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, the seventh layer is coated by ferric oxide, the eighth layer is coated by silicon dioxide, the ninth layer is coated by ferric oxide, the tenth layer is coated by silicon dioxide, and the eleventh layer is coated by ferric oxide. The optical thickness of each layer is from 105 nm to 115 nm. The transmittance of the purple and blue light bands is altered or controlled by superimposing the different layers of the two materials or changing the optical thickness of each layer. The spectral transmission curve of such a yellow-transmissive optical film 112 is shown in Fig. 29, wherein the light source is white light, the medium is air, the substrate is glass, the angle is 0.0, and the reference wavelength is 550.0 nm.

### Embodiment 20: method for producing the optical film 112 that transmits yellow light 2:

The yellow-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 9 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, the seventh layer is coated by ferric oxide, the eighth layer is coated by silicon dioxide, and the ninth layer is coated by ferric oxide. The optical thickness of each layer is from 105 nm to 115 nm. The transmittance of the purple and blue light bands is altered or controlled by superimposing the different layers of the two materials or changing the optical thickness of each layer. The spectral transmission curve of such a yellow-transmissive optical film 112 is shown in Fig. 30, wherein the light source is white light, the medium is air, the substrate is glass, the angle is 0.0, and the reference wavelength is 550.0 nm.

### Embodiment 21: method for producing the optical film 112 that transmits yellow light 3:

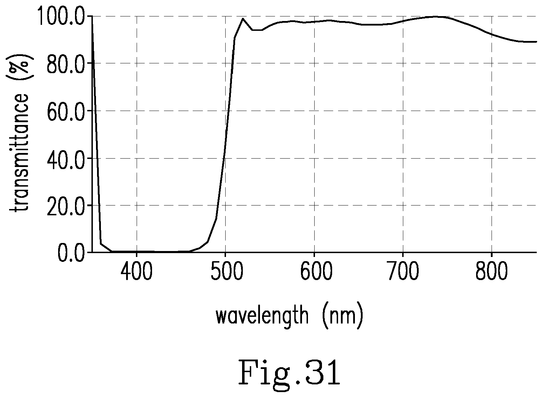

The yellow-transparent optical film 112 is formed by alternately superposing a layer of ferric oxide formed by depositing ferric oxide by vacuum evaporation or sputtering, and a layer of silicon dioxide deposited by vacuum evaporation or sputtering. There are totally 7 layers of ferric oxide layer and silicon dioxide layer. The first layer is coated by ferric oxide, the second layer is coated by silicon dioxide, the third layer is coated by ferric oxide, the fourth layer is coated by silicon dioxide, the fifth layer is coated by ferric oxide, the sixth layer is coated by silicon dioxide, and the seventh layer is coated by ferric oxide. The optical thickness of each layer is from 105 nm to 115 nm. The transmittance of the purple and blue light bands is altered or controlled by superimposing the different layers of the two materials or changing the optical thickness of each layer. The spectral transmission curve of such a yellow-transmissive optical film 112 is shown in Fig. 31, wherein the light source is white light, the medium is air, the substrate is glass, the angle is 0.0, and the reference wavelength is 550.0 nm.

### Embodiments

1. A lighting device for creating an atmosphere of a living environment, comprising: an LED light source having a light-emitting angle no less than 45 degrees; a transparent housing configured to contain the LED light source and a sealed bottom, and having an atmosphere light-filtering portion emitting an atmosphere-creating light and having a first plurality of high refractive index layers and a second plurality of low refractive index layers where the first and second pluralities of layers are arranged in a staggered manner; and a lighting housing cooperating with the transparent housing to perform at least one of a reflection and a diffusion for the atmosphere-creating light to create the living environment atmosphere.
2. The lighting device according to Embodiment 1, wherein the transparent housing is configured to contain the LED light source in a fixed manner.
3. The lighting device according to Embodiments 1-2, wherein the transparent housing is configured to contain the LED light source in a detachable manner.
4. The lighting device according to Embodiments 1-4, wherein the transparent housing further has an upper portion and a lower portion opposite to the upper portion, and the atmosphere light-filtering portion is located on the upper portion near the LED light source.
5. The lighting device according to Embodiments 1-5, wherein the lighting housing has an upper end, a lower end opposite to the upper end, and a first opening disposed on one of the upper end and the lower end.
6. The lighting device according to Embodiments 1-6, wherein the lighting housing further includes a second opening disposed opposite to the first opening.
7. A lighting device for creating an atmosphere of a living environment, comprising: an LED light source having a light-emitting angle no less than 45 degrees; a transparent housing configured to contain the LED light source and having an atmosphere light-filtering portion; and an optical film disposed on a surface of the atmosphere light-filtering portion, and having a first plurality of high refractive index layers and a second plurality of low refractive index layers where the first and second pluralities of layers are arranged in a staggered manner.
8. The lighting device according to Embodiment 7, wherein the atmosphere light-filtering portion is disposed to surround the transparent housing.
9. The lighting device according to Embodiments 7-8, wherein the transparent housing has a shape being one selected from a group consisting of a cylinder, a bucket, a horn and a spherical shapes.
10. The lighting device according to Embodiments 7-9, wherein the transparent housing further has a sealed transparent bottom disposed opposite to the LED light source.
11. The lighting device according to Embodiments 7-10, wherein the transparent housing further has a sealed transparent bottom having an opening.
12. A filter device for a lighting device to create an atmosphere of a living environment, wherein the lighting device includes an LED light source having a light-emitting angle no less than 45 degrees and providing an illumination light, the filter device comprising: a transparent housing configured to contain the LED light source, and having an atmosphere light-filtering portion and a sealed transparent bottom, wherein the sealed transparent bottom allows the illumination light to pass therethrough; and an optical film disposed on a surface of the atmosphere light-filtering portion, and having a first plurality of high refractive index layers and a second plurality of low refractive index layers where the first and second pluralities of layers are arranged in a staggered manner.
13. The filter device according to Embodiment 12, wherein the transparent housing wraps therein the LED light source in one of a fixed manner and a detachable manner.
14. The filter device according to Embodiments 12-13, wherein the lighting device further includes a lighting housing.
15. The filter device according to Embodiments 12-14, wherein the LED light source, the transparent housing and the lighting housing are configured to be fixed together.
16. The filter device according to Embodiments 12-15, wherein the transparent housing has an outer surface, and the optical film is disposed on one of a portion and an entirety of the outer surface.

Based on the above, the present invention effectively solves the problems and drawbacks in the prior art, and thus it meets the demands of the industry and is of value.

## Claims

1. A lighting device for creating an atmosphere of a living environment, comprising:
an LED light source having a light-emitting angle no less than 45 degrees;
a transparent housing configured to contain the LED light source and a sealed bottom, and having an atmosphere light-filtering portion emitting an atmosphere-creating light and having a first plurality of high refractive index layers and a second plurality of low refractive index layers where the first and second pluralities of layers are arranged in a staggered manner; and
a lighting housing cooperating with the transparent housing to perform at least one of a reflection and a diffusion for the atmosphere-creating light to create the living environment atmosphere.

2. The lighting device according to Claim 1, wherein the transparent housing is configured to contain the LED light source in a fixed manner.

3. The lighting device according to Claim 1, wherein the transparent housing is configured to contain the LED light source in a detachable manner.

4. A lighting device for creating an atmosphere of a living environment, comprising:
an LED light source having a transparent housing and a light-emitting angle no less than 45 degrees, wherein the transparent housing has an atmosphere light-filtering portion and a sealed bottom, and the atmosphere light-filtering portion emits an atmosphere-creating light and has a first plurality of high refractive index layers and a second plurality of low refractive index layers where the first and second pluralities of layers are arranged in a staggered manner; and
a lighting housing cooperating with the transparent housing to perform at least one of a reflection and a diffusion for the atmosphere-creating light to create the living environment atmosphere.

5. The lighting device according to Claim 4, wherein the atmosphere light-filtering portion is located on an upper portion near the LED light source.

6. The lighting device according to Claim 4, wherein the lighting housing has a first opening disposed on one of an upper end and a lower end of the lighting housing.

7. The lighting device according to Claim 6, wherein the lighting housing further includes a second opening disposed opposite to the first opening.

8. A lighting device for creating an atmosphere of a living environment, comprising:
an LED light source having a light-emitting angle no less than 45 degrees;
a transparent housing configured to contain the LED light source and having an atmosphere light-filtering portion and a sealed transparent bottom; and
an optical film disposed on a surface of the atmosphere light-filtering portion, and having a first plurality of high refractive index layers and a second plurality of low refractive index layers where the first and second pluralities of layers are arranged in a staggered manner.

9. The lighting device according to Claim 8, wherein the atmosphere light-filtering portion is disposed to surround the transparent housing.

10. The lighting device according to Claim 8, wherein the transparent housing has a shape being one selected from a group consisting of a cylinder, a bucket, a horn and a spherical shapes.

11. A lighting device assembly for creating an atmosphere of a living environment, comprising:
an LED white light source having a light-emitting angle no less than 45 degrees; and
a plurality of transparent housing, wherein each of the transparent housing:
has an atmosphere light-filtering portion, a sealed transparent bottom and a specific atmosphere optical film, wherein the specific atmosphere optical film is disposed on a surface of the atmosphere light-filtering portion, and has a first plurality of high refractive index layers and a second plurality of low refractive index layers where the first and second pluralities of layers are arranged in a staggered manner; and
dispose the transparent housing to wrap the LED white light source according to a user's choice to allow the lighting device assembly to create the atmosphere of the living environment according to the user's choice.

12. The lighting device according to Claim 11, wherein the sealed transparent bottom disposed opposite to the LED white light source on the transparent housing.

13. The lighting device according to Claim 11, wherein the sealed transparent bottom is an opening.

14. A lighting device for creating an atmosphere of a living environment, comprising:
an LED light source having a light-emitting angle no less than 45 degrees; and
a plurality of transparent housing, wherein each of the transparent housing:
has an atmosphere light-filtering portion, a sealed transparent bottom and a specific atmosphere optical film, wherein the specific atmosphere optical film is disposed on a surface of the atmosphere light-filtering portion to generate a specific atmosphere light, and has a first plurality of high refractive index layers and a second plurality of low refractive index layers where the first and second pluralities of layers are arranged in a staggered manner; and
dispose the transparent housing to wrap the LED light source according to a user's choice to allow the lighting device assembly to create the atmosphere of the living environment according to the user's choice.

15. The lighting device according to Claim 14, wherein the atmosphere light-filtering portion is disposed to surround the transparent housing.

16. The lighting device according to Claim 14, wherein the transparent housing has a shape being one selected from a group consisting of a cylinder, a bucket, a horn and a spherical shapes.

17. A filter device for a lighting device to create an atmosphere of a living environment, wherein the lighting device includes an LED light source having a light-emitting angle no less than 45 degrees and providing an illumination light, the filter device comprising:
a transparent housing configured to contain the LED light source, and having an atmosphere light-filtering portion and a sealed transparent bottom, wherein the sealed transparent bottom allows the illumination light to pass therethrough; and
an atmosphere optical film disposed on a surface of the atmosphere light-filtering portion, and having a first plurality of high refractive index layers and a second plurality of low refractive index layers where the first and second pluralities of layers are arranged in a staggered manner.

18. The filter device according to Claim 17, wherein the transparent housing wraps therein the LED light source in one of a fixed manner and a detachable manner.

19. The filter device according to Claim 18, wherein:
the lighting device includes a lighting housing; and
the LED light source, the transparent housing and the lighting housing are configured to be fixed together.

20. The filter device according to Claim 17, wherein the transparent housing has an outer surface, and the atmosphere optical film is disposed on one of a portion and an entirety of the outer surface.
